# EUROPEAN PATENT SPECIFICATION

(11) **EP 1 853 124 B1**
(45) Date of publication and mention of the grant of the patent: **03.09.2008**
(21) Application number: 05815570.6
(22) Date of filing: 28.11.2005
(51) Int. Cl.: A23L 1/40, A23L 1/00

(54) **PROCESS FOR MAKING BOUILLON OR SEASONING CUBES**
VERFAHREN ZUR HERSTELLUNG VON BRÜHE- ODER WÜRZEWÜRFELN
PROCÉDÉ DE FABRICATION DE CUBES DE BOUILLON OU CONDIMENT

(30) Priority: 15.12.2004 EP 04078410
(43) Date of publication of application: 14.11.2007
(73) Proprietor: Unilever N.V., 3013 AL Rotterdam (NL); Unilever PLC, London Greater London EC4P 4BQ (GB)
(72) Inventor: YING, Vivyan, Yan Unilever Australia R & D, Knoxfield, Victoria VIC 3180 (AU)
(74) Representative: Tjon, Hon Kong Guno
(86) International application number: PCT/EP2005/012869
(87) International publication number: WO 2006/063694

(56) References cited:
- EP-A- 0 780 058
- EP-A- 1 269 863
- EP-A- 1 269 864
- EP-A- 1 419 698
- EP-A- 1 419 699
- WO-A-20/04049831
- DE-U1-4202004 009 83
- GB-A- 1 417 952
- US-A1- 2002 168 450

## Description

### Field of the invention

The present invention relates to a process for making bouillon (including broth or stock) or seasoning cubes.

### Background of the invention

Bouillon cubes are well known articles in the western and non-western cooking. Conventionally, bouillon cubes comprise solid, more or less dry ingredients such as one or more of salt, sugar, flavour enhancers (like e.g. monosodium glutamate), herbs, spices, vegetable particulates, colourants and flavourants, next to e.g. 1-30% fat or oil.

The industry distinguishes between so-called hard bouillon cubes and soft (or pasty) bouillon cubes. Hard cubes contain traditionally about 5-15% fat, and in order to have the desirable properties upon processing (mixing, pressing) the fats employed traditionally contained a smaller or larger amount (or all) of partially hardened fat. As is well known, partial hardening can lead (next to desirable melting behaviour) to formation of triglycerides of trans-unsaturated fatty acids (or in short TFA's). The presence of such TFA's has become undesired.

Thus, there has been a need for a process for making hard bouillon cubes which do not contain triglycerides of trans-unsaturated fatty acids (or in short TFA's), and which cubes are also not too hard. The first part of such problem has been addressed by EP 1269864 (= WO 03/003858), which discloses a process for making hard bouillon cubes containing oil and little to no fat, which comprises 1-20% oil, optionally fat, 4-80% of a milled filler, up to 95% of a non-milled filler, 4-20% of a sticking agent. The expression "milled filler" in this reference apparently means a powdered filler which has been milled to an especially fine granulometry. The milled filler may comprise a milled crystalline ingredient such as salt, glutamate and/or glucose, and may have been milled to fine particles having a mean diameter of from 5-80µm.

EP 1269863 (= WO03/000077) discloses a process for making soft bouillon tablets, which comprises oil or mainly oil, and no or little fat besides non-fat conventional bouillon ingredients. The cubes or tablets comprise 3-60% of an oil, optionally fat, 5-70% of a fine filler, up to 79% of a coarse filler. "Fine filler' in this reference apparently means a powdered filler which has been milled to an especially fine granulometry, and comprises particles having a mean diameter of from 5-10µm. The fine filler may be a milled crystalline ingredient such as salt, glutamate, and/or sugar.

WO 2004/049831 discloses a process for making hard bouillon tablets or cubes comprising 1-10% oil (and optionally solid fat), 10-80% of a filler, 1-20% of a sticking agent. The filler in this reference apparently means a substance of the carbohydrate group such as starch, flour, cassava powder, and/or low DE maltodextrines. The sticking agent allows to obtain a certain tablet physical stability by slightly raising the moisture of the mass. This can be achieved by adding 0.2-1.5% water. Other sticking agents include reaction flavours and/or other flavour powders, vegetable powders, meat extract and maltodextrins.

Although the three solutions above such may give satisfactory results in some applications, they all have their disadvantages. The first and second method require a specific milling operation to achieve a specific granulometry of part or all of the non-fat ingredients, and thus requires additional (and expensive) equipment in a factory producing bouillon cubes. The third method requires the use of a sticking agent which should be dosed in the right amount. Clearly, there is a need for a method for producing bouillon or seasoning cubes (soft or hard) which contain fat, which fat is substantially free of (i.e. less than 3%, preferably less than 2%, more preferably less than 1%) of triglycerides trans-unsaturated fatty acids, and which method does not require the need for milled fillers as disclosed in EP 1269864 and EP 1269863, nor requires the use of a sticking agent as disclosed in WO 2004/049831. Preferably, the process should allow the use of commercially available ingredients as are conventionally used on bouillon or seasoning cubes, which do not need to be subjected to a specific processing operation such as milling, as that requires additional process steps and equipment. Preferably, the process should yield cubes which are not too hard.

### Summary of the invention

It has now been found that such may be achieved (at least in part) by a process for preparing bouillon or seasoning cubes comprising (weight % based on total bouillon cube):
(a) 1-30% of powdered fat,
(b) 1-10% of oil liquid at 20°C,
(c) 30-98% of particulate ingredients comprising one or more of salt, flavour enhancers, sugar, yeast extract, hydrolysed vegetable protein,
the process comprising the steps of:
- a first mixing stage of the particulate ingredients (c) with at least part of the powdered fat (a) for at least 10 seconds,
- adding to that mixture at least part of the oil (b) and have a second mixing stage for at least 10 seconds,
- press to cubes
wherein the powdered fat has preferably such a particle size that in a sieve analysis:
at least 80% by weight of the individual fat powder-particles passes a sieve with a mesh size of 2 mm and wherein the powdered fat is prepared by one of spray-cooling, spray-chilling, spray-freezing, prilling, grinding, cryo-grinding, or milling.

Contrary to the prior art, the presently claimed process does not require the bulk ingredients to be milled to a specific granulometry or the use of a filler as described in EP 1269864 and EP 1269863 or of a sticking agent as described in WO 2004/049831. Hence, preferably the bulk of the ingredients is not milled. Also, it is preferred that the cubes according to the invention do not comprise a filler (e.g. material of the carbohydrate group like (corn)starch, flour, cassava powder, and/or maltodextrin) and/or sticking agent.

Herein, the powdered fat which is prepared by spray-cooling, spray-chilling, spray freezing, prilling, grinding, cryo-grinding, or milling, as in use in the present invention, is for brevity referred to as "powdered fat".

In the above, the powdered fat has preferably such a particle size that in a sieve analysis:
at least 80% by weight of the individual fat powder-particles passes a sieve with a mesh size of 2 mm, and more preferably at least 80% (preferably: 100%) by weight of the individual fat powder-particles passes a sieve with a mesh size of 1.5 mm, and even more preferably at least 80% (preferably: 100%) by weight of the individual fat powder-particles passes a sieve with a mesh size of 1 mm, and most preferably at least 80% by weight of the individual fat powder-particles passes a sieve with a mesh size of 0.5 mm. Preferably, the powdered fat is not micronised fat or granulated micronised fat.

The bulk density of the powdered fat is preferably between 400 and 700 g/l, more preferably between 500 and 600 g/l.

In the above process and product the flavour enhancers preferably comprise monosodium glutamate or other particulate flavour enhancers.

### Detailed description of the invention

In the process according to the invention it is essential that there are two consecutive mixing stages, one before adding the liquid oil (i.e. mixing of at least part, preferably all of the particulate ingredients, incl. powdered fat), and one after adding the liquid oil. Although the mixing stages can last almost infinitively long, it is preferred for both mixing stages that sufficiently long is mixed to obtain a homogeneous mixture: first for all particulate ingredients (incl. powdered fat), then with the liquid oil. Actual mixing times needed will depend e.g. on the type of mixer chosen, and the mixing times needed can be determined by the skilled person in the art, taking into account a minimum time of mixing needed. From a practical point of view preferred that the first mixing stage takes 10 seconds to 120 minutes, preferably 30 seconds to 60 minutes, and preferably at least 1 minute (and preferably maximum 120 minutes, more preferably maximum 60 minutes), as long as a homogeneous mixture is obtained by the mixing operation. Likewise, it is preferred that the second mixing stage takes 10 seconds to 120 minutes, preferably 30 seconds to 60 minutes, and preferably takes at least 1 minute minute (and preferably maximum 120 minutes, more preferably maximum 60 minutes). The same considerations for the second mixing stage apply as for the first mixing stage.

The mixing itself can be performed with any mixer as known in the art of making hard bouillon cubes, such as a ribbon, paddle mixer or Nauta mixer.

Regarding the composition, it is preferred that the amount of powdered fat is 5-20%. The powdered fat can be a fat already solid at 20°C as it is, or by fully hardening a vegetable oil. Although fats that become liquid at e.g. 25°C may work under processing temperatures which are lower, it may be preferred to use fats (for fraction (a) above) that are still solid at 30°C, or more preferably still solid at temperatures above 40°C. This will widen the margin for operating conditions. The fat fraction (a) should be solid at processing (mixing) temperature; and preferably still contain enough solid matter under storage conditions.

The amount of oil liquid at 20°C is preferably 2-10%, more preferably 2-7% (all % by weight based on the total composition). The oil liquid at 20°C preferably comprises olive oil, corn oil, sunflower oil, canola oil, or mixtures thereof.

Depending upon the recipe, the first mixing stage may include one or more of herbs, spices, nucleotide flavour enhancers, vegetable particulates, meat powder, flavourants, colourants in the mixture.

The powdered fat is preferably free of triglycerides of trans-fatty acids. A preferred fat for this is fully hardened palm oil. Hence, it is preferred that the powdered fat comprises (preferably at least 50% by weight) fully hardened palm oil.

Preferably, the process according to the invention results in hard bouillon or seasoning cubes.

The cubes may be pressed by conventional pressing equipment for (hard) bouillon cubes, such as Fette presses. Prior to pressing the mixed material may be left to mature for a period of a few hours to a few days.

Although it is referred to herein as "bouillon or seasoning cubes", the present invention of course does not just encompass cube-shaped objects, but also other solid particulates of 0.1-25 gram weight, preferably of regular shape, such as tablets, brick-shaped objects, briquettes, dragee's, pellets etcetera. Likewise, the invention does not just relate to cubes for making bouillon, but also to cubes for seasoning, soup, sauce, etcetera. For brevity, these are all herein referred to as "bouillon or seasoning cubes".

### EXAMPLES

Hard bouillon cubes were made according to the following composition:

| *Ingredients* | *Amounts (weight % on total cube)* |
|---|---|
| Bulk ingredients (salt, sugar, MSG) | 60 % |
| Yeast extract | 15 % |
| Sett P55 (powdered hydrogenated palm fat, melting point 55-60°C) | 14 % |
| Liquid oil (sunflower) | 3 % |
| Herbs and spices | 3 % |
| Meat extract powder | 2.5 % |
| Flavours | 2 % |
| Colours | 0.5 % |

The powdered fat had a bulk density of 500-600 g/l, and in a sieve analysis 100% passes a sieve with a mesh size of 1 mm, nearly 100% passes a mesh size of 0.5 mm, and about 50% by weight passes a mesh size of 0.2 mm.

The processing involved mixing all dry ingredients including the powdered fat (Sett P55) in a paddle mixer for 5 minutes. Then the liquid oil was added, and mixing was continued for another 5 minutes. Then the mixture was fed to a cubing machine (W. Fette, Rotary Tabletting Machine Hanseate Perfecta 4B). The resulting cubes were dry, hard, and upon pressure by hand crumbled apart.

## Claims

1. Process for preparing bouillon or seasoning cubes comprising (weight % based on total bouillon cube):
(a) 1-30% of powdered fat,
(b) 1-10% of oil liquid at 20°C,
(c) 30-98% of particulate ingredients comprising one or more of salt, flavour enhancers, sugar, yeast extract, hydrolysed vegetable protein,
the process comprising the steps of:
- a first mixing stage of the particulate ingredients (c) with at least part of the powdered fat (a) for at least 10 seconds,
- adding to that mixture at least part of the oil (b) and have a second mixing stage for at least 10 seconds,
- press to cubes.
wherein the powdered fat has preferably such a particle size that in a sieve analysis:
at least 80% by weight of the individual fat powder-particles passes a sieve with a mesh size of 2 mm and wherein the powdered fat is prepared by one of spray-cooling, spray-chilling, spray-freezing, prilling, grinding, cryo-grinding, or milling.

2. Process according to claim 1, wherein the powdered fat has such a particle size that in a sieve analysis at least 80% by weight of the individual powdered fat particles passes a sieve with a mesh size of 1.5 mm.

3. Process according to claim 1-2, wherein the powdered fat has such a particle size that in a sieve analysis at least 80% by weight of the individual powdered fat particles passes a sieve with a mesh size of 1 mm.

4. Process according to claim 1-3, wherein the bulk density of the powdered fat is between 400 and 700 g/l.

5. Process according to claim 1-4, wherein the powdered fat is prepared by spray-cooling.

6. Process according to claim 1-5, wherein the first mixing stage takes 10 seconds to 120 minutes, preferably 30 seconds to 60 minutes.

7. Process according to claim 1-6, wherein the second mixing stage takes 10 seconds to 120 minutes, preferably 30 seconds to 60 minutes.

8. Process according to claim 1-7, wherein the amount of powdered fat is 5-20%.

9. Process according to claim 1-8, wherein the amount of oil liquid at 20°C is 2-7%.

10. Process according to claim 1-9, wherein the oil liquid at 20°C comprises olive oil, corn oil, sunflower oil, canola oil, or mixtures thereof.

11. Process according to claim 1-10, wherein powdered fat is free of triglycerides of trans-fatty acids.

12. Process according to claim 1-11, wherein the powdered fat comprises fully hardened palm oil.

13. Process according to claim 1-12, wherein at the first mixing stage one or more of herbs, spices, nucleotide flavour enhancers, vegetable particulates, meat powder, flavourants, colourants are included in the mixture.

## Patentansprüche

1. Verfahren zur Herstellung von Bouillon- oder Würzwürfeln, umfassend (Gewichts-%, bezogen auf gesamten Bouillonwürfel):
(a) 1-30 % pulverförmiges Fett,
(b) 1-10 % Öl, das bei 20 °C flüssig ist,
(c) 30-98 % partikuläre Ingredientien, die eines oder mehrere von Salz, Aromaverstärkern, Zucker, Hefeextrakt, hydrolysiertem Pflanzenprotein umfassen,
wobei das Verfahren die Schritte umfasst:
- eine erste Mischstufe der partikulären Ingredientien (c) mit wenigstens einem Teil des pulverförmigen Fettes (a) für wenigstens 10 Sekunden,
- Zugeben wenigstens eines Teils des Öls (b) zu jenem Gemisch und Durchführen einer zweiten Mischstufe für wenigstens 10 Sekunden,
- Pressen zu Würfeln,
wobei das pulverförmige Fett vorzugsweise eine solche Partikelgröße hat, dass bei einer Siebanalyse wenigstens 80 Gew.-% der einzelnen pulverförmigen Fettpartikel durch ein Sieb mit einer Maschenweite von 2 mm gehen, und wobei das pulverförmige Fett durch eines von Spray-Cooling, Spray-Chilling, Prilling, Zerkleinerung, Kaltmahlen, Mahlen erhalten wird.

2. Verfahren nach Anspruch 1, wobei das pulverförmige Fett eine solche Partikelgröße hat, dass bei einer Siebanalyse wenigstens 80 Gew.-% der einzelnen pulverförmigen Fettpartikel durch ein Sieb mit einer Maschenweite von 1,5 mm gehen.

3. Verfahren nach Anspruch 1 bis 2, wobei das pulverförmige Fett eine solche Partikelgröße hat, dass bei einer Siebanalyse wenigstens 80 Gew.-% der einzelnen pulverförmigen Fettpartikel durch ein Sieb mit einer Maschenweite von 1 mm gehen.

4. Verfahren nach Anspruch 1 bis 3, wobei die Schüttdichte des pulverförmigen Fetts zwischen 400 und 700 g/l liegt.

5. Verfahren nach Anspruch 1 bis 4, wobei das pulverförmige Fett durch Spray-Cooling hergestellt wird.

6. Verfahren nach Anspruch 1 bis 5, wobei die erste Mischstufe 10 Sekunden bis 120 Minuten, vorzugsweise 30 Sekunden bis 60 Minuten, in Anspruch nimmt.

7. Verfahren nach Anspruch 1 bis 6, wobei die zweite Mischstufe 10 Sekunden bis 120 Minuten, vorzugsweise 30 Sekunden bis 60 Minuten, in Anspruch nimmt.

8. Verfahren nach Anspruch 1 bis 7, wobei die Menge an pulverförmigem Fett 5 bis 20 % ist.

9. Verfahren nach Anspruch 1 bis 8, wobei die Menge an Öl, das bei 20 °C flüssig ist, 2 bis 7 % ist.

10. Verfahren nach Anspruch 1 bis 9. wobei das Öl, das bei 20 °C flüssig ist, Olivenöl, Maisöl, Sonnenblumenöl, Canolaöl oder Gemische davon umfasst.

11. Verfahren nach Anspruch 1 bis 10, wobei das pulverförmige Fett frei von Triglyceriden von trans-Fettsäuren ist.

12. Verfahren nach Anspruch 1 bis 11, wobei das pulverförmige Fett vollständig gehärtetes Palmöl umfasst.

13. Verfahren nach Anspruch 1 bis 12, wobei in der ersten Mischstufe eines oder mehrerer von Kräutern, Gewürzen, Nucleotid-Aromaverstärkern, partikelförmigen Pflanzenmaterialien, Fleischpulver, Aromamitteln, Färbemitteln, in dem Gemisch enthalten ist/sind.

## Revendications

1. Procédé de préparation de cubes de bouillon
ou d'assaisonnement comprenant (pourcentages en poids sur la base d'un cube de bouillon entier) :
(a) 1 à 30 % de matières grasses en poudre,
(b) 1 à 10 % d'huile liquide à 20° C,
(c) 30 à 98 % d'ingrédients particulaires comprenant l'un ou plusieurs sel, exhausteurs de goût, sucre, extrait de levure, protéines végétales hydrolysées,
le procédé comprenant les étapes suivantes :
- une première étape de mélange des ingrédients particulaires (c) avec au moins une partie des matières grasses en poudre (a) pendant au moins 10 secondes,
- l'ajout d'au moins une partie de l'huile (b) à ce mélange et une seconde étape de mélange pendant au moins 10 secondes,
- la formation de cubes,
dans lequel les matières grasses en poudre présentent de préférence une taille de particule telle que dans une analyse granulométrique : au moins 80 % en poids des particules individuelles de matières grasses en poudre passent à travers un tamis présentant une taille de maille de 2 mm et dans lequel les matières grasses en poudre sont préparées par refroidissement par pulvérisation, réfrigération par pulvérisation, congélation par pulvérisation, grelonage, broyage, cryobroyage, ou mouture.

2. Procédé selon la revendication 1, dans lequel les matières grasses en poudre présentent une taille de particule telle que dans une analyse granulométrique au moins 80 % en poids des particules individuelles de matières grasses passent à travers un tamis présentant une taille de maille de 1,5 mm.

3. Procédé selon les revendications 1 à 2, dans lequel les matières grasses en poudre présentent une taille de particule telle que dans une analyse granulométrique au moins 80 % en poids des particules individuelles de matière grasse passent à travers un tamis présentant une taille de maille de 1 mm.

4. Procédé selon les revendications 1 à 3, dans lequel la densité apparente des matières grasses en poudre se situe entre 400 et 700 g/l.

5. Procédé selon les revendications 1 à 4, dans lequel les matières grasses en poudre sont préparées par refroidissement par pulvérisation.

6. Procédé selon les revendications 1 à 5, dans lequel la première étape de mélange dure de 10 secondes à 120 minutes, de préférence de 30 secondes à 60 minutes.

7. Procédé selon les revendications 1 à 6, dans lequel la seconde étape de mélange dure de 10 secondes à 120 minutes, de préférence de 30 secondes à 60 minutes.

8. Procédé selon les revendications 1 à 7, dans lequel la quantité de matières grasses en poudre est de 5 à 20 %.

9. Procédé selon les revendications 1 à 8, dans lequel la quantité d'huile liquide à 20° C est de 2 à 7 %.

10. Procédé selon les revendications 1 à 9, dans lequel l'huile liquide à 20° C comprend de l'huile d'olive, de l'huile de maïs, de l'huile de tournesol, de l'huile de colza, ou des mélanges de celles-ci.

11. Procédé selon les revendications 1 à 10, dans lequel les matières grasses en poudre ne contiennent pas de triglycérides d'acides gras trans.

12. Procédé selon les revendications 1 à 11, dans lequel les matières grasses en poudre comprennent de l'huile de palme complètement durcie.

13. Procédé selon les revendications 1 à 12, dans lequel, lors de la première étape de mélange, un ou plusieurs herbes, épices, exhausteurs de goût (nucléotides), particules végétales, poudre de viande, aromatisants, colorants sont compris dans le mélange.
